# EUROPEAN PATENT APPLICATION

(11) **EP 2 372 532 A1**
(43) Date of publication of application: **05.10.2011**
(21) Application number: 10171491.3
(22) Date of filing: 30.07.2010
(51) Int. Cl.: G06F 9/44

(54) **Method for programming a web application**

(71) Applicant: Jung, Sebastian, 81245 München (DE)
(72) Inventor: Jung, Sebastian, 81245 München (DE)
(74) Representative: Herrmann, Franz

(57) **Abstract**

A method executed on a web client (1) and a method executed on a web server (2) for developing a web application in a cloud based programming environment is described. The method uses moveable DOM nodes which are associated with widgets on the user interface of the programming environment. Changes t the DOM objects are stored in a web server (2) mirroring the changes on the DOM objects and the changes performed on the web server (2) are displayed on the user interface of the programming environment.

## Description

The invention relates to a method executed on a web client and a method executed on a web server for programming a web application.

One of the most relevant technology shift is connected with the advent of the internet. Millions of people are using now the internet for accessing information on web sites of the internet.

For accessing the internet, people generally use a browser, which creates and administers a document object model of the web pages that has been called by the user.

In recent years, there has also been a tendency to offer web service, that comprise the same functionality as applications, which run on local computers. Since these web sercive are now accessible via the internet, applications no longer need to be installed on a local client. In addition there is no need for maintaining the local installation.

Among these applications that are now accessible via the internet are applications concerning text processing, spread sheets, presentations and data storage. Examples for such applications are Google Docs or Microsoft Office Web Apps.

The migration of applications from local computers into the internet is one example for internet based computing, also called cloud computing, whereby shared resources, software and information are provided to local computer or other web access devices on demand.

Cloud computing entails a paradigm shift comparable to the shift from main frame to client-server structures in the early 1980s. Typical cloud computing providers deliver common business applications online that are accessed from another web service or software like a web browser while the software and data for the business application are stored on servers of the provider.

So far only typical business applications have been made accessible via the internet. The programming of these applications itself is still performed by using integrated development environments (= IDE) that are installed locally on clients.

In the future, there will be a growing demand for programming environments that are hosted in the web and accessible via the web. What has happened to usual business applications will therefore also happen to programming environments that enable the developement of programs. These cloud based programming environments and the programs generated by these cloud based programming environments will be stored on servers and accessed from another web service or software like a web browser.

One essential requirement, that any cloud based programming environment must meet, is data safety. It may not happen that a software engineer is working on a project and finally has to realize that all his programming work is lost because the interconnection between the web client and the web server has been lost or disturbed. Another essential requirement is that the cloud based programming environment should look and feel like a locally installed programming environment.

Proceeding from this prior art, the invention is based on the object, to provide a method executed on a web client and on a web server, the method being arranged for programming a web application, wherein the method ensures data safety and enables a look and feel similar to locally installed programming environments, in particular by avoiding any flicker. This object is achieved by the methods having the features of the independent claims. Advantageous embodiment and refinements are specified in claims dependent thereon.

The method executed on a web client and on a web server comprises a number of actions. At first, a graphical programming environment is provided, which runs in a web browser on a web client and which allows for creating or modifying a graphical item for a user interface of the web application. Further, a document object model is used, which is stored on the web client and is used by the web browser for administering and rendering the graphical item on the user interface of the web application which is displayed on a display of the web client.

The method further includes capturing an event for creating or modifying a graphical item of the user interface of the web application and causing the created or modified graphical item to be stored on the web server. After this event has been captured, at least one property of an object contained in the document object model and associated with the graphical item is determined. This property is associated with the creation or modification of the graphical item. These property may be a changed position of the graphical item and/or some information identifying the grahical item. This property of the object is sent to the web server and caused to be stored in a data base, which is located in the web server and is used for storing properties of objects contained in the document object model. On receipt of a message from the web client requesting the storage of the property in the data base, the web server stores this property of the object in the data base and generates update data for the document object model. These object data are then sent back to the web client.

On receiving the object update data from the web server, the document object model is updated with the object update data and the display of the programming environment is refreshed based on the updated document object model.

The methods executed on the web client and the web server ensure that any changes made by the user of the graphical programming environment are transferred to the web server, once the operation of the users have reached an intermediate state, in which the achieved state should be saved. Thus, the achieved state is repeatedly saved to the web server. By the generation of object update data and by inserting these object update data into the document object model on the web client, the user of the programming environment si able to control the changes made on the servers side.

The methods also provide a look and feel similar to a locally installed programming environment, since only a part of the objects of the documents are updated, in particular the object that is associated with the graphical item on the user interface of the application to be developed. Since only a part of the document object model is updated, the display can be refreshed without flickering.

The document object model contains a tree structure of the objects. The part of tree structure, which refers to graphical items, starts with a graphical item root node, which is followed by type nodes, which refer to various types of graphical items. These various types of graphical items might be various types of controls or widgets, such as simple buttons, check boxes, input boxes, text boxes or the like. Each of the type nodes forms the starting point of a type branch formed by a number of object nodes that follow immediately the type node and represent the objects of the document object model. Each of the object nodes refer to one particular graphical item, wherein the graphical items are of the type, to which a type branch corresponds.

Such a structure of the document object model allows to associate the type branches of the document object model with lists of the graphical items of various types on the server side. Each list in the data base on the server may correspond to a type branch of the document object model on the web client.

The tree structure of the document object model allows attributing particular functionalities to object nodes within a type branch. Thus, it is possible to use one particular object node within a type branch for palette objects associated with a graphical item in a palette position on the user interface of the graphical programming environment. It is further possible to use the remaining object nodes within the type branch for panel objects, that are associated with graphical items that are positioned on a panel of the user interface of the web application. The assignment of a particular functionality to an object node can be mirrored in the list associated with the particular type branch of the graphical items. Thus, an action that is performed on a particular object within a type branch can also be performed on the items of the list stored in the data base on the web server. In particular changes of the position of the object nodes within one of the type branches of the tree and properties of the object nodes can be caused to be stored in the data base on the server.

Typically, at least the position of one of the objects within one of the type branches of the tree and at least one further property relating to the creation or modification of the associated graphical item are caused to be stored in the data base. Such a property may be the new position of the associated graphical item on the user interface of the application to be developed.

On capturing an event, by which a graphical item is dragged from the palette position into a panel position on a panel of a web application, the panel position of the graphical item on the panel is determined and data are generated that cause the web server to store the properties of the graphical items associated with the type branch in a manner, in which the palette object, whose associated graphical item has been dragged from the palette position to the panel position, is moved from the palette position to a panel position and a new palette object is created. According to the data received in connection with the request from the web client, the web server stores the properties of the graphical items associated with a type branch in a manner, in which the palette object, whose graphical item has been dragged from the palette position to the panel position, is moved from the palette position to the panel position and a new palette object is created.

The update data for the document object model are generated based on a template of the user interface of the programming environment, wherein the template contains instructions to retrieve the data stored in the data base for each type branch and to generate the update data.

By such an interaction between web client and web server, a user interface of the web application to be developed can easily be created by drag and drop. The graphical items are dragged from the palette position into the panel position. The drop event triggers a procedure on the server side, by which the changed data of the objects associated with the dropped graphical item are stored in the data base on the web server and by which the update data are generated for refreshing the display of the programming environment.

The graphical item can be a control or a widget that is wrapped in an object of the document object model. Since the objects are movable within the document object model, an attribute of the object is set in a manner as to constrain the motion of the associated graphical item on a range within a panel of web application to be developed.

For the communication between web client and web server, the Asynchronous JavaScript and XML (= AJAX) technique can be used. The AJAX request contains information to the changed position in the document object model and/or further properties of the palette object such as information relating to the changed position of the associated graphical item on the user interface of the application to be developed; and the AJAX response contains update data for the type branch.

In particular if the AJAX-technique is used for the data exchange between web client and web server the update data is usually HTML code wrapped in XML.

Further advantages and properties of the present invention are disclosed in the following description, in which exemplary embodiments of the present invention are explained in detail based on the drawings:
- Figure 1: illustrates a typical web client that accesses a web server via the internet;
- Figure 2: represents a screen shot of a programming environment that is used for creating a panel provided with various widgets;
- Figure 3: shows a sequence diagram of the process shown in Figure 2;
- Figure 4: illustrates the architecture;
- Figure 5: shows a sequence diagram, which illustrates the interaction between the components of the architecture illustrated in Figure 4;
- Figure 6: illustrates the memory model on the client side and server side; and
- Figure 7: is a flow diagram of a process, in which a widget is dragged on the panel of the application to be developed.

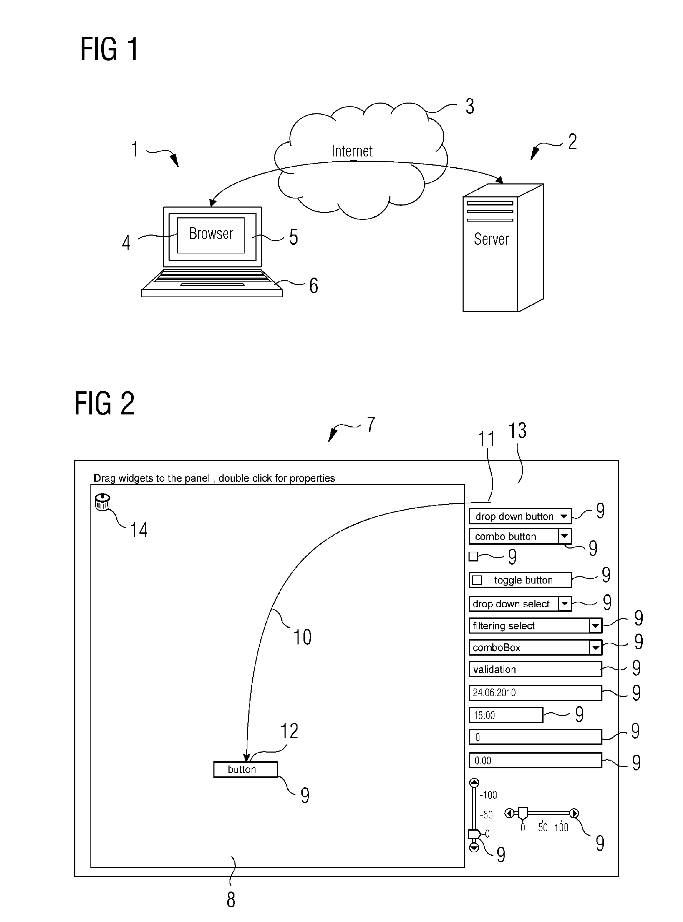

Figure 1 shows a typical web client 1, which interacts with a web server 2 via an internet 3. In principle, the web client 1 and the web server 2 are functional units, that might be realized in various ways. The web client 1 may be a computer, a mobile phone, a personal digital assistant or any similar device, which allows a user to access the web server 2 via the internet 3. The web server 2 itself can be distributed over a number of physical units or may be implemented within one physical unit.

The internet 3 is a data network that interconnects web clients 1 and web servers 2 generally on a global scale. The internet 3 may be also a local data network that connects a group of clients of some organisation to the web server 2 of the same organisation. Such an internet structure is sometimes referred to as intranet. The internet 3 therefore refers to data nets of any scale as long as the communication between web client 1 and web server 2 is based on protocols that are used for organizing WAN communication.

In the following, a method is presented that allows to use a programming environment, which is administered by the web server 2. For this purpose, the web client 1 is provided with a browser 4, which can be used for accessing information and internet services, which are stored on web servers 2. The browser 4 needs not to be an application that is explicitly called browser but may also be any locally installed application that allows access to the internet 3. As for any other application running on the web client 1, a graphical user interface of the browser 4 is displayed on a display 5 and is operated using various input devices 6 such as a keyboard or a mouse.

The user of the web client 1 shall now be enabled to develop web publications using a graphical programming environment, which is accessible via the internet 3.

The programming environment represents a form of cloud computing, wherein term "cloud" is a metaphor for the internet 3.

Figure 2 shows an examplary screen shot of a programming environment, which might run on the browser 4 of the web client 1. The programming environment 7 comprises a panel 8, which represents a user interface of the application to be developed and on which various widgets 9 can be dragged by an drag-and-drop movement 10 from a palette position 11 to a panel position 12. In Figure 2 one widget 9 that represents a simple button has thus been transferred from the palette position 11 to the panel position 12. The palette position 11 of the various widgets 9 is located beside the panel 8 in a selection area 13. The widgets 9, which are depicted in the selection area 13 are from the top to the bottom of the selection area 13: a simple button, a drop down button, a combo button, a check box, a toggle button, an input box with a drop down menu for selecting an item, an input box that performs some filtering after an input has been selected, a combo box with a menu, from which an input to the text field can be selected, a simple input box with validation, an input box, for which a date can be chosen from a calendar, an input box for time values, an input box for entering numbers, an input box for entering an amount in some currencies and a vertical and a horizontal slider. Each of these widgets 9 can be dragged onto the panel 8 while designing a user interface for the web application to be developed.

Instead of dragging one of the widgets 9 onto the panel 8, a widget 9, either at palette position 11 or at panel position 12 can also be dragged on a trash can 14. The trash can 14 can be used for removing a widget 9 from the panel 8. The drag-and-drop movement 10 can also terminate on the trash can 14, which results in leaving the widget 9 at the palette position 11.

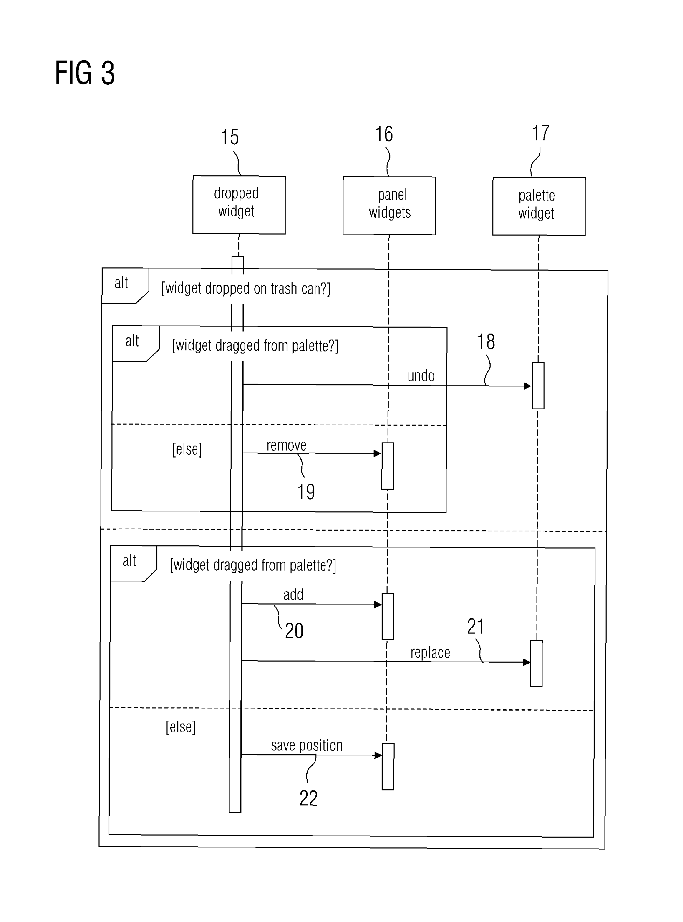

Figure 3 shows a sequence diagram for illustrating the logic, that needs to be implemented in the program environment 7. The sequence diagram of Figure 3 includes three lanes associated with different types of the widgets 9. These types correspond to a dropped widget 15, a panel widget 16 and a palette widget 17.

According to the sequence diagram depicted in Figure 3, a number of checks are performed after an event has been captured, which indicates, that the widget 9 has been dropped.

First it is checked, whether the widget 9 has been dropped on the trash can 14. If the widget 9 has been dropped on the trash can 14, it is checked whether the widget 9 has been dragged from the palette position 11. If the widget 9 has been dragged from the palette position 11, the changes to the dropped widget 15 are undone by a cancellation step 18 and the dropped widget 15 assumes again the position and properties of the palette widget 17.

If the widget 9, which was dropped on the trash can 14, has not been dragged from the palette position 11, a removal step 19 is performed on the dropped widget 15. The removal step results in the removal of the panel widget 16, which corresponds to one of the widget 9 at the panel position 12.

If the first check turns out that the dropped widget 15 was not dropped on the trash can 14, it is checked again whether the dropped widget 15 has been dragged from the palette position 11. If the dropped widget 15 has been dragged from the palette position 11, the dropped widget 15 is added to the panel widget by a saving step 20 and the palette widget 17 that had been dropped on the panel 8 is replaced by a replacement step 21.

If it turns out that the dropped widget 15 has not been dragged from the palette position 11, the dropped widget 15 must be one of the panel widgets 16, whose position on the panel 8 has been changed. Accordingly the position of the dropped widget 15 is saved in a saving step 22.

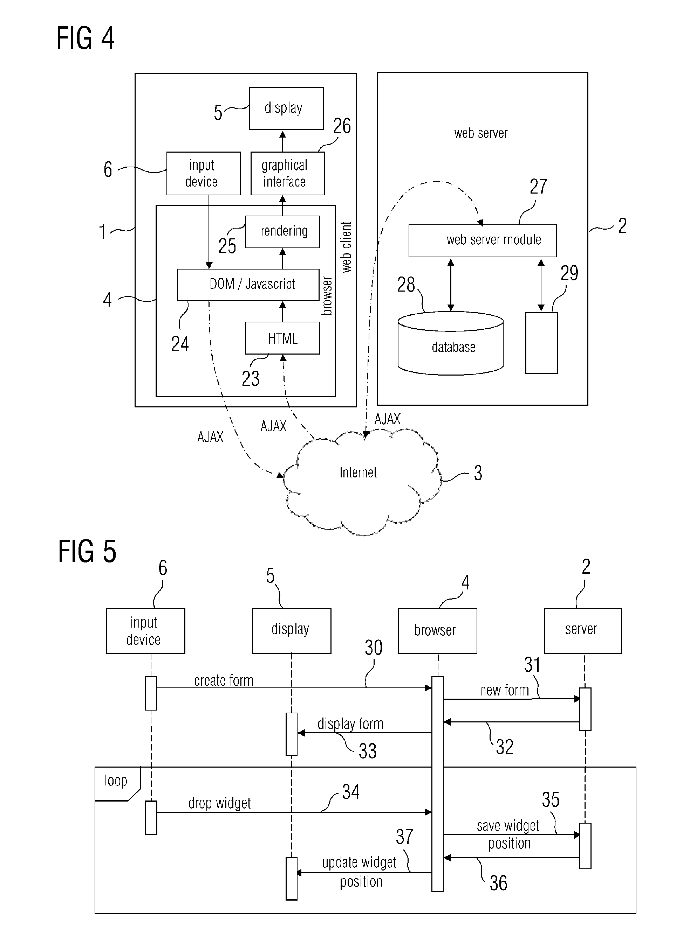

Figure 4 illustrates the architecture of the web client 1 and the web server 2. As mentioned before, the web client 1 is provided with the display 5 and the input device 6. The web client 1 is further provided with the browser 4, which is capable of processing a HTML document 23 via a script module 24 and a rendering module 25, which interacts with a graphical interface 26 of the web client 1 for displaying the programming environment on display 5. The script module 24 is also used for handling events that are caused by the input device 6.

As illustrated in Figure 4 the web client 1 and the web server 2 interact by the AJAX technique.

The web server 2 comprises a web server module 27, which interacts with a data base 28 and a template document 29, which is used for constructing changes for the HTML document 23.

Figure 5 shows a sequence diagram having four lanes, which are associated with the input device 6, the display 5, the browser 4 and the web server 2.

After the programming environment 7 has been loaded by providing the browser 4 with an appropriate URL, the user may request the creation of one of the panels 8 by input device 6. The browser 4 then receives a corresponding notification 30 from the input device 6. The browser 4 sends a corresponding request 31 to web server 2, which responds by a response 32 containing HTML code for creating a corresponding panel. This HTML code may be inserted into the HTML document 23, which is loaded by the browser 4, when the programming environment 7 is called. Based on the updated HTML document 23, the script module 24 is used by the browser for rendering display data 33, which are sent to the graphical interface 26 of the display 5.

If the user now wishes to provide the newly created panel 8 with widgets 9, the user may use the input device 6 for dragging and dropping the widgets 9 onto the panel 8. Thereafter, the browser 4 will receive a notification 34, that a widget 9 has been dropped. Then, the browser 4 sends a request 35 to the web server 2. The web server 2 responds by response 36, which includes HTML code for updating the HTML document 23. The browser 4 then creates display data 37, which are sent to the graphical interface 26 for updating the display 5.

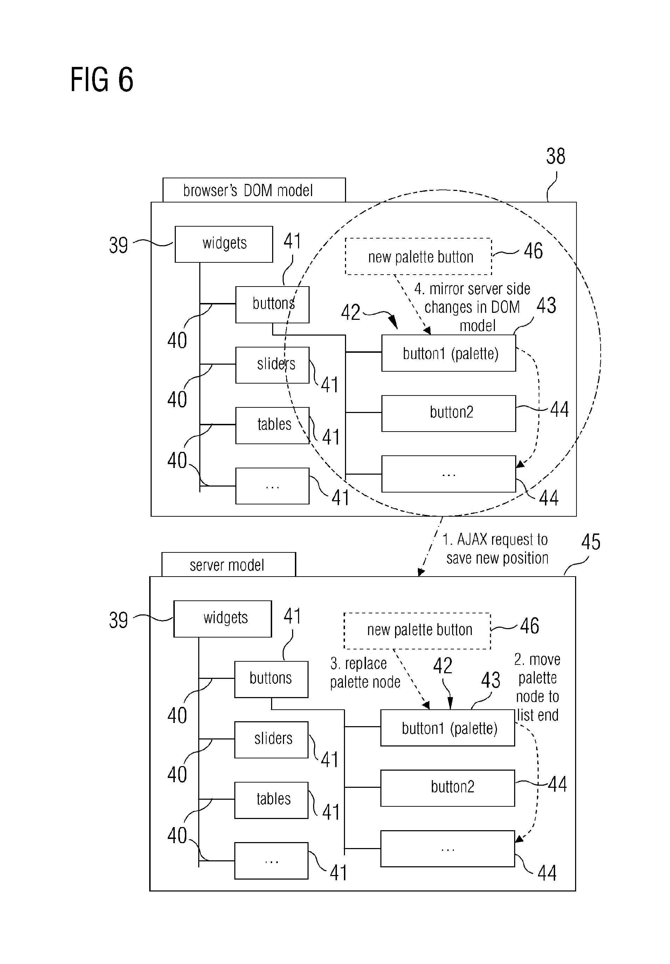

For processing the HTML document 23, the script module uses the document object model (= DOM) 38, which is depicted in Figure 6. The document object model 38 generally comprises a tree structure which contains a widget node 39. The widget node 39 forms the root node for a number of type branches 40. The type branches 40 are associated with various types of widgets 9. For example in Figure 6, the type branch for simple buttons has been expanded to show a number of objects 42 associated with simple buttons displayed within the programming environment 7. In each type branch 40, the first object in the series of objects is a palette object 43, which is followed by a number of panel objects 44.

This part of the document object model 38 on the web client 1 is mirrored by list structures 45 on the web server 2. The server side list structures 45 have the same structure as the document object model 38 on the web client 1. The list structures 45 are stored in the data base 28 in such a manner that the type branches 40 are lists of items, which are stored in the data base 28.

The document object models 38 and 45 may also be used for explaining in more detail what happens by the request 35 and the response 36.

Once the widget 9 has been dragged and dropped from the palette position 11 to the panel position 12, the palette object 43 in the type branch 40 referring to the widgets 9 of type "button" is provided with the new position data of the associated graphical item on the panel 8 and the request 35 is sent to the web server 2. The request 35 is an AJAX request, by which at least the properties of the palette object 43 are provided to the web server module 27. These properties may include the new position data and/or data identifying the palette object 43. For example, the palette object may be identified by the identification numeral id = 0, whereas the panel objects 44 are identified by idendification numerals id > 0. The web server module 27 now updates the data base 28. The update of the data base 28 is performed in a manner which includes the following changes in the server side list structures 45: the palette object 43 is transferred to the end of the type branch 40, thus becoming a panel object 44 and a new palette object 46 is created, which assumes the position of the palette object 43. The id = 0 is now assigned to the new palette object 46 and the previous palette object 43 receives an idendification numeral id > 0. In addition, the new position data of the previous palette object 43 are saved in the data base 28.

It should though be kept in mind that the list structures 45 are only a representation, that illustrates the data structure of the data saved in the data base 28.

It should further be noted, that in practice the properties of all objects 42 contained in a type branch 40 may be tran-ferred to the web server 2 and and saved in the data base 28.

After the data base 28 has been updated, the web server module 27 creates updated data that are sent to the web client 1 by the response 36. These update data are created by the web server module 27 using the template document 29 which contains instructions to generate HTML code for the widgets stored in the data base 28. The web server module 27 is particularly able to create HTML code wrapped in XML for updating the HTML document 23. The update of the client side document object model 38 is performed after the response 36, which is an AJAX response 36, has been received by the browser 4 and processed by the script module 24.

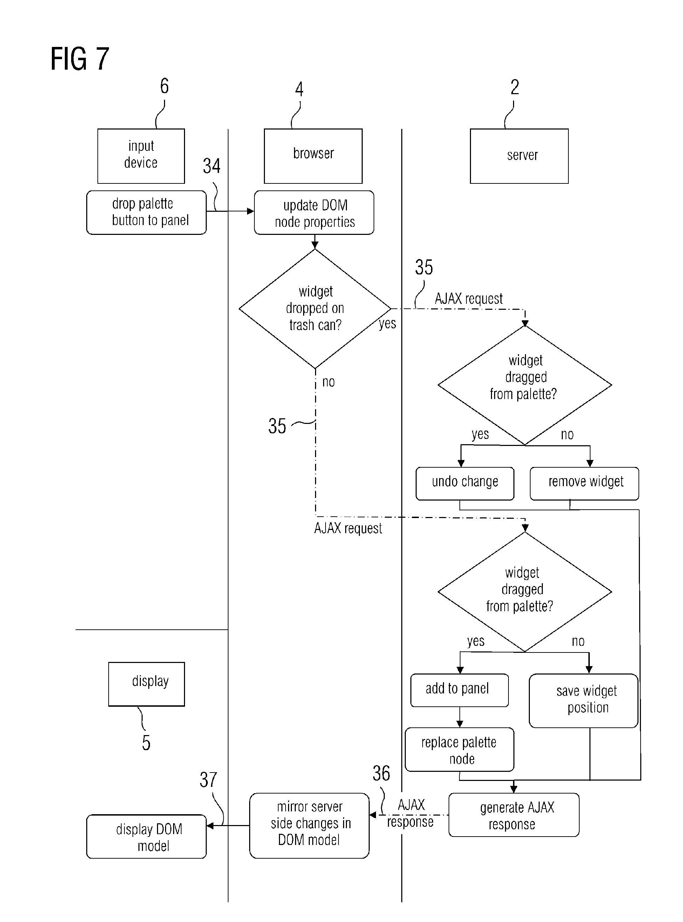

Figure 7 shows a sequence diagram having three lanes associated with the input device 6, the browser 4 and the web server 2. The sequence diagram 7 is used for illustrating how the logic depicted in Figure 3 is implemented.

After one of the widgets 9 on the palette position 11 has been dragged and dropped onto the panel 8, the notification 34 is sent to the browser 4 which updates the properties of the corresponding palette object 43 in the document object model 38. Consequently it is checked, whether the widget 9 has been dropped on the trash can 14. If yes, the AJAX request 35 is sent to the web server 2, where the web server module 27 checks whether the widget 9 has been dragged from the palette position 11. If yes, the changes of the properties of the palette object 43 are not transferred into the data base 28 and the generated AJAX response 36 contains information, which leaves the document object model 38 on the client side and thus the display 5 unchanged.

If no, the widget 9 must be a widget at the panel position 12, which corresponds to a panel object 44 in the list structures 45. This panel object 44 is removed and the generated AJAX response 36 contains information, which causes the script module 24 to remove the corresponding panel object 44 from the client side document object model 38.

Going back to the first check, in which it is checked, whether the widget 9 has been dropped on the trash can 14, an AJAX request 35 is sent, if the answer is no. After the AJAX request 35 has been received by the web server module 27, a check is performed, whether the widget 9 has been dragged from the palette position 11. If the answer is yes, the data base 28 is updated in a manner which reflects the changes in the server side list structures 45 as depicted in Figure 6. In particular, the palette object 43 is moved towards the end of the type branch 40, which corresponds to the widgets of type "button" and the new palette object 46 assumes the position of the previous palette object 43. Again the generated AJAX response 36 contains information that causes the script module 24 to mirror the changes in the data base 28 in the document object model 38 as depicted in Figure 6 and to display the changes on the display 5.

If the answer to the question whether the widget 9 has been dragged from the palette position 11 is no, the dragged and dropped widget 9 must be a widget 9 from a panel position 12, which corresponds to one of the panel objects 44, whose position properties are updated and transmitted to the client side document object model 38 by the AJAX response 36.

It should be noted that the various components of the web client 1 and of the web server 2 can be realized by software, hardware or a combination of software and hardware.

For realizing the script module 24, a script language like JavaScript can be used. Java Server Faces (= JSF) might be considered for realizing the intercommunication between the web client 1 and the web server 2. For providing the widgets 9 one of the JSF widget libraries may be used. For moving the nodes of the document object model 38, JavaScript libraries like Dojo and DojoFaces can be used. These libraries provide for JSF the dojo:move tag. The dojo:move tag can contain any number of widgets 9, which thus become moveable.

Instead of Dojo and DojoFaces other JavaScript libraries like jQuery can be used, which also supports drag and drop operations.

If JSF together with the libraries Dojo and DojoFaces is used, the DojoFaces tag dojo:move is used, which is supported by the Dojo widget dojo:dnd.moveable. By setting constraint = "parent" in the DojoFaces tag dojo:move, the variant dojo.dnd.move.parentConstrainedMoveable is used, which limits the motion of the widget 9 onto the frame of the surrounding DOM node. Thus, the widget 9 cannot be moved outside the panel 8.

Each widget type has a default position which corresponds to the palette position 11 outside the panel 8. At the end of each drag and drop movement 10 the Dojo tag dojo:move sends the "on move stop" event. On capturing this event the current position of the dropped widget 9, in particular the dropped and left attributes of the widget 9 are sent by the AJAX request 35 to the web server 2.

The web server 2 administers lists of all widgets 8 in the data base 28. Each widget 9 on the list is represented by a hash map, which contains the properties of the widget 9.

The template document 29 of the web server contains for each widget type, only one dojo:move tag with a widget therein. However, each dojo:move tag lies within a ui:repeat tag, which causes that all instances of the widget 9, which has been dragged onto the panel 8, as well as the instances of the widgets 9 at the palette position 11 are generated and caused to be displayed on the display 5 of the web server 2, while the ui:repeat tag works through the list stored in the data base 28.

The ui:repeat tag uses the variable var="widget" and for creating individual widgets 9 the Java Server Faces Expression Language (= JSF EL) can be used to retrieve the position of the widget by #{widget['top']} and #{widget['left']}.

The methods described herein have the advantage that changes on the panel 8 are immediately saved on the web server 2. Thus, there is no danger that extensive programming work is lost due to an instable internet connection.

Since the changes, that are stored in the web server 2 are displayed to the user of the programming environment the user is always able to control whether the storage procedure has been performed properly.

Another advantage is the use of the AJAX technology that is coupled to the use of objects 42 in the document object models 38 and list structure 45. The AJAX technology allows updating the displayed programming environment 7 in a granular way since only certain objects 42 within the document object model 38 are updated or exchanged. Thus, the programming environment 7 will work without any flicker and will look and feel like a programming environment that is installed locally on the web client 1.

It should be noted that the method can be implemented by a computer program product, that contains code for implementing the method described herein, if the code is executed by a processor in a computer. In some embodiments, the computer program product may be code stored on a computer readable data carrier such as a disc, a compact disc or a digital versatile disc or the like. In other embodiments, the computer program product may also be code stored on a data storage unit on a server or an array of servers. Such a data storage unit may be a hard disc or an array of hard disc or the like. In further embodiments, the data carrier may also be an electrical carrier signal that can be used for transferring the code from the web server 2 or from any other server, which can be used for downloading the program code, to the web client 1.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

## Claims

1. A method executed on a web client (1) for programming a web application, comprising:
- providing a graphical programming environment (7), which runs in a web browser (4) on the web client (1) and which allows for creating or modifying a graphical item (9) for a user interface of the web application;
- using a document object model (38), which is stored on the web client (1) and is used by the web browser (4) for administering and rendering the graphical item (9) on the user interface (8) for a display (5) of the web client (1);
- capturing an event (34) for saving the graphical item (9) of the user interface of the web application;
- on saving the graphical item (9), determining of a property of an object (42) contained in the document object model (38) and associated with the graphical item (9);
- sending the property of the object (42) to a web server (2) and causing the property to be stored in a data base (28), which is located on the web server (2) and is used for storing properties of objects (41) contained in the document object model (38); and
- on receiving object update data from the web server (2), updating the document object model (38) by the object update data and refreshing the display (5) of the programming environment (7) based on the updated document object model (38).

2. The method according to Claim 1,
- in which the document object model (38) contains a tree structure,
- in which type nodes (41) following a graphical item root node (39) refer to various types of graphical items (9),
- in which subsequent object nodes (42), each following one of the type nodes (41), form a type branch (40) and represent the objects (42) of the document object model (38), and
- in which the objects (42) are moveable within the tree structure.

3. The method according to Claim 2,
- in which one of the objects (42) within each type branch (40) is a palette object (43) associated with a graphical item (9) in a palette position (11) on the user interface of the graphical programming environment (7) and
- in which the remaining objects (42) within the type branch (40) are panel objects (44) each associated with a particular graphical item (9) at a respective panel position (12) on a panel (8) of the user interface of the web application.

4. The method according to Claim 2 or 3,
wherein the position of the object (42) within one of the type branches (40) of the tree and at least one further property of the object (42) are caused to be stored in the data base (28).

5. The method according to Claim 3 or 4,
wherein on capturing an event, by which a graphical item (9) is dragged from a palette position (11) into a panel position (12) on a panel (8) of the web application, wherein the panel position (12), which the graphical item (9) assumes on the panel (8), is determined and data are generated that cause the web server (2) to store the properties of the graphical items (9) associated with a type branch (40) in a manner, in which a palette object (43), whose graphical item (9) has been dragged from the palette position (11) to the panel position (12), is moved from the position of the palette object (43) to the position of one of the panel objects (44), and a new palette object (46) is created.

6. The method according to any one of Claims 1 to 5,
in which an attribute of the object (42) constrains the motion of its associated graphical item (9) on the user interface of the programming environment (7) on the range of a panel (8) of the user interface of the programming environment (7).

7. The method according to any one of Claims 1 to 6, wherein the code for the graphical item is code for a control or widget (9) wrapped into an object (42) of the document object model (38).

8. A method executed on a web server (2) for programming a web application, comprising:
- providing a graphical programming environment (7), which runs in a web browser (4) on a web client (1) and which allows for creating or modifying a graphical item (9) for a user interface of the web application; and
- on request of the web client (1), receiving a property of an object (42) contained in an document object model (38) and associated with the graphical item (9) and storing the property in a data base (28) on the web server (2); and
- generating update data for the document object model (38) sending the update data back to the web client (1).

9. The method according to Claim 8,
wherein according to the data received on a request from the web client (1), the web server (2) stores the properties of the graphical items (9) associated with a type branch (40) in a manner, in which the palette object (43), whose associated graphical item (9) has been dragged from a palette position (11) to a panel position (12), is moved from the position of the palette object (43) to the position of a panel object (44), and a new palette object (46) is created.

10. The method according to Claim 8 or 9,
wherein on receipt of a request from the web client (1), the update data for the document object model (38) are generated based on a template (29) of the user interface of the programming environment (7), wherein the template (29) contains instructions to retrieve for each type branch (40) the data stored in the data base (28) and to generate the update data.

11. The method according to Claim 9 or 10,
wherein the update data contains HTML code wrapped in XML.

12. The method according to any one of Claims 1 to 11,
- wherein an AJAX enabled browser (4) on the web client (1) is used and wherein for the data exchange between web server (2) and web client (1) an AJAX request (35) and an AJAX response (36) is used,
- the AJAX request (35) containing the property of the object (42), whose position corresponds to a position of a palette object (43), whose associated graphical item (9) is the graphical item (9) in the palette position (11) on the graphical user interface of the programming environment (7); and
- the AJAX response (36) containing the update data for the type branch (40) of the document object model (38).

13. A web client arranged for programming a web application wherein the web client is arranged for performing a method according to any of claims 1 to 7 and/or 12.

14. A web server arranged for programming a web application wherein the web server is arranged for performing a method according to any of claims 8 to 12.

15. A computer program product containing code for performing a method according to any one of Claims 1 to 14 if the code is executed on a computer.
